# EUROPEAN PATENT APPLICATION

(11) **EP 2 542 008 A1**
(43) Date of publication of application: **02.01.2013**
(21) Application number: 11747413.0
(22) Date of filing: 23.02.2011
(51) Int. Cl.: H04W 72/08, H04W 72/04

(54) **INFORMATION TRANSMISSION METHOD, BASE STATION DEVICE AND MOBILE STATION DEVICE**

(30) Priority: 25.02.2010 JP 2010040139
(71) Applicant: NTT DoCoMo, Inc., Tokyo 100-6150 (JP)
(72) Inventor: TAOKA, Hidekazu, Tokyo 100-6150 (JP); MIKI, Nobuhiko, Tokyo 100-6150 (JP); KISHIYAMA, Yoshihisa, Tokyo 100-6150 (JP)
(74) Representative: HOFFMANN EITLE
(86) International application number: PCT/JP2011/054037
(87) International publication number: WO 2011/105453

(57) **Abstract**

Wideband transmission is performed efficiently using spectrum aggregation. When performing information transmission using spectrum aggregation that aggregates frequency spectra which are non-contiguous and in different frequency bands, first information requiring communication quality is allocated to an anchor spectrum with small path loss among different frequency spectra used for information transmission and transmitted to amobile station apparatus (UE), and second information requiring lower communication quality than the first information is allocated to a payload spectrum having large path loss and transmitted to the mobile station apparatus (UE) .

## Description

### Technical Field

The present invention relates to an information transmission method, a base station apparatus and a mobile station apparatus, and more particularly, to an information transmission method, a base station apparatus and a mobile station apparatus using spectrum aggregation.

### Background Art

UMTS (Universal Mobile Telecommunications System) networks adopt HSDPA (High Speed Downlink Packet Access) or HSUPA (High Speed Uplink Packet Access) for the purpose of improving frequency utilization efficiency and improving data rates and thereby maximize features of a W-CDMA (Wideband Code Division Multiple Access) -based system. Studies are being carried out on Long Term Evolution (LTE) for the purpose of further achieving higher-speed data rates, reduced delays for such UMTS networks (e.g., see Non-Patent Literature 1).

Third-generation systems are generally able to realize transmission rates on the order of a maximum of 2 Mbps on downlinks using a fixed band of 5 MHz. On the other hand, LTE-based systems (LTE systems) can realize transmission rates of a maximum of 300 Mbps on downlinks and 75 Mbps on uplinks using a variable band of 1.4 MHz to 20 MHz. Studies are also being carried out on a system, successor to LTE (e.g., LTE Advanced (LTE-A)) for the purpose of realizing wider bands and faster systems in UMTS networks.

For example, LTE-A-based systems (LTE-A systems) are scheduled to enhance 20 MHz, which is a maximum system band according to LTE specification, up to on the order of 100 MHz. Furthermore, in a system band of an LTE-A system, it is scheduled to designate at least one fundamental frequency block assuming the system band of the LTE system as one unit. In LTE-A, this fundamental frequency block is called "component carrier (CC)." Aggregating a plurality of fundamental frequency blocks into one wider band in this way is called "carrier aggregation."

### Citation List

### Non-Patent Literature

Non-Patent Literature 1: 3GPP, TR25. 912 (V7.1.0), "Feasibility study for Evolved UTRA and UTRAN", Sept. 2006

### Summary of Invention

### Technical Problem

The above-described carrier aggregation aggregates neighboring frequency component carriers, ensures a transmission bandwidth of, for example, on the order of 100 MHz or more to realize wideband transmission. However, in an environment in which a plurality of communication carriers use common radio resources, it is not easy to ensure a contiguous frequency spectrum of on the order of 100 MHz or more. For this reason, LTE-A also supports spectrum aggregation that aggregates frequency spectra (e.g., component carriers) which are non-contiguous and in different frequency bands to ensure a wideband transmission bandwidth. The introduction of such spectrum aggregation makes it possible to realize wideband transmission even in a case where a contiguous frequency spectrum cannot be ensured.

However, various problems are pointed out about spectrum aggregation originating in the use of frequency spectra which are non-contiguous and in different frequency bands. For example, spectrum aggregation has a problem that since propagation path loss (path loss) differs from each frequency spectrum used for information transmission, the range, in which control information satisfies the required receiving quality, differs from each frequency spectrum and there is a problem that the cell cannot be arranged efficiently. Furthermore, since it is necessary to demodulate all control information of different frequency spectra, each mobile station apparatus UE needs to monitor the control information allocated to different frequency spectra through a receiving circuit, resulting in a problem that power consumption increases. As a result of such problems, it is difficult to ef ficientlyperformwideband transmission using spectrum aggregation.

The present invention has been implemented in view of the above-described circumstances and it is an object of the present invention to provide an information transmission method, abasestation apparatus and a mobile station apparatus capable of efficiently performing wideband transmission using spectrum aggregation.

### Solution to Problem

An information transmission method according to the present invention is an information transmission method using spectrum aggregation that aggregates frequency spectra, which are non-contiguous and in different frequency bands, to perform wideband transmission, including the steps of allocating first information requiring communication quality to a frequency spectrum having small path loss among the frequency spectra used for information transmission, and allocating second information requiring lower communication quality than the first information to a frequency spectrum having large path loss; and transmitting the first information with the frequency spectrum having small path loss, and transmitting the second information with the frequency spectrum having large path loss.

According to this method, since the first information requiring communication quality is transmitted with the frequency spectrum having small path loss, the first information can be transmitted stably to the mobile station apparatus. For example, the inclusion of control information in the first information can solve various problems caused by differences in path loss between different frequency spectra such as allowing the cell to be arranged efficiently without considering differences in path loss between different frequency spectra, and can thereby efficiently perform wideband transmission using spectrum aggregation.

A base station apparatus according to the present invention is a base station apparatus that performs information transmission using spectrum aggregation that aggregates frequency spectra which are non-contiguous and in different frequency bands, including an allocating section configured to allocate first information requiring communication quality to a frequency spectrum having small path loss among the frequency spectra used for information transmission, and to allocate second information requiring lower communication quality than the first information to a frequency spectrum having large path loss, a first transmitting section configured to transmit the first information with the frequency spectrum having small path loss, and a second transmitting section configured to transmit the second information with the frequency spectrum having large path loss.

According to such a configuration, since the first information requiring communication quality is transmitted with the frequency spectrum having small path loss, the first information can be stably transmitted to the mobile station apparatus. For example, the inclusion of control information in the first information can solve various problems caused by the differences in path loss between different frequency spectra, for example, allowing the cell to be arranged efficiently without considering differences in path loss between different frequency spectra, and it is thereby possible to efficiently perform wideband transmission using spectrum aggregation.

A mobile station apparatus according to the present invention is a mobile station apparatus that receives information transmission using spectrum aggregation that aggregates frequency spectra which are non-contiguous and in different frequency bands, including a first receiving section configured to receive first information requiring communication quality allocated to a frequency spectrum having small path loss among the frequency spectra used for information transmission, a second receiving section configured to receive second information requiring lower communication quality than the first information allocated to a frequency spectrum having large path loss, a first demodulating section configured to demodulate the first information received by the first receiving section, and a second demodulating section configured to demodulate the second information received by the second receiving section.

According to this configuration, since the first information requiring communication quality is transmitted with the frequency spectrum having small path loss, the first information can be stably received from the base station apparatus. For example, when the first information includes control information, this configuration can solve various problems caused by differences in path loss between different frequency spectra such that it is only necessary to drive a receiving circuit that monitors control information allocated to frequency spectrum having small path loss, and can thereby efficiently perform wideband transmission using spectrum aggregation.

### Technical Advantages of Invention

According to the present invention, since the first information requiring communication quality is transmitted with a frequency spectrum having small path loss, the first information can be stably transmitted to a mobile station apparatus. For example, the inclusion of control information in the first information can solve various problems caused by differences inpathlossbetweendifferent frequency spectra, for example, allowing the cell to be arranged efficiently without considering differences in path loss between different frequency spectra, and can thereby efficiently perform wideband transmission using spectrum aggregation.

### Brief Description of Drawings

FIG.1 is a diagram illustrating system bands of LTE and LTE-A systems;
FIG.2 is a diagram illustrating an overview of spectrum aggregation;
FIG.3 is a diagram illustrating a configuration of a mobile communication system according to an embodiment of the present invention;
FIG.4 is a block diagram illustrating a transmitting section of a base station apparatus according to the above embodiment; and
FIG.5 is a block diagram illustrating a receiving section of a mobile station apparatus according to the above embodiment.

### Description of Embodiments

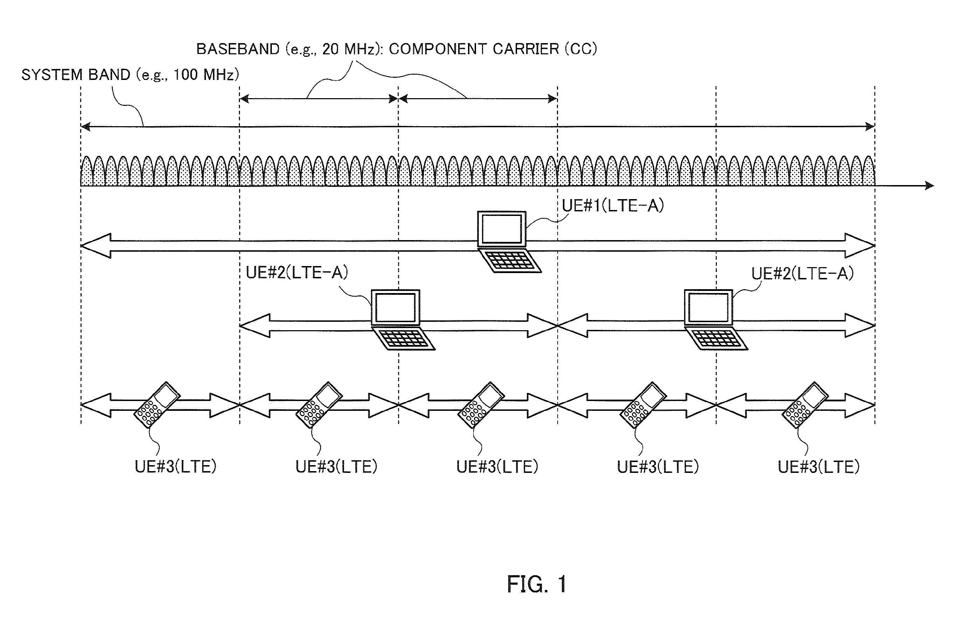

Before describing an information transmission method using spectrum aggregation according to the present invention, a system band of an LTE-A system will be described first. FIG.1 is a diagram illustrating systembands of LTE and LTE-A systems. FIG.1 shows system bands in a hierarchic bandwidth configuration when an LTE-A system made up of a plurality of fundamental frequency blocks and an LTE system made up of one fundamental frequency block coexist.

As shown in FIG.1, the LTE-A system performs radio communication in a variable system bandwidth of, for example, 100 MHz or less and the LTE system performs radio communication in a variable system bandwidth of 20 MHz or less. The system band of the LTE-A system made up of at least one fundamental frequency block (component carrier (CC)) assuming the system band of the LTE system as one unit. A wider band is realized by aggregating a plurality of component carriers (carrier aggregation).

For example, in FIG.1, the system band of the LTE-A system constitutes a system band (20 MHz×5=100 MHz) including bands of five component carriers assuming the system band (baseband: 20 MHz) of the LTE system as one component carrier. In FIG.1, a mobile station apparatus UE (User Equipment) #1 is a mobile station apparatus supporting an LTE-A system (also supporting an LTE system) and supporting a system band of up to 100 MHz. A UE#2 is a mobile station apparatus supporting an LTE-A system (also supporting an LTE system) and supporting a system band of up to 40 MHz (20 MHz×2=40 MHz). A UE#3 is a mobile station apparatus supporting an LTE-A system (but not supporting an LTE-A system) and supporting a system band of up to 20 MHz (baseband).

The above-described carrier aggregation aggregates neighboring frequency component carriers, thereby ensures a transmission bandwidth of, for example, on the order of 100 MHz and realizes wideband transmission. However, in an environment in which a plurality of communication carriers use common radio resources, it is not easy to ensure contiguous frequency spectrum of on the order of 100 MHz or more. In Europe and the United States in particular where approval of use of frequency spectra is strictly controlled, it is difficult for an independent communication carrier to ensure contiguous frequency spectrum of on the order of 100 MHz or more.

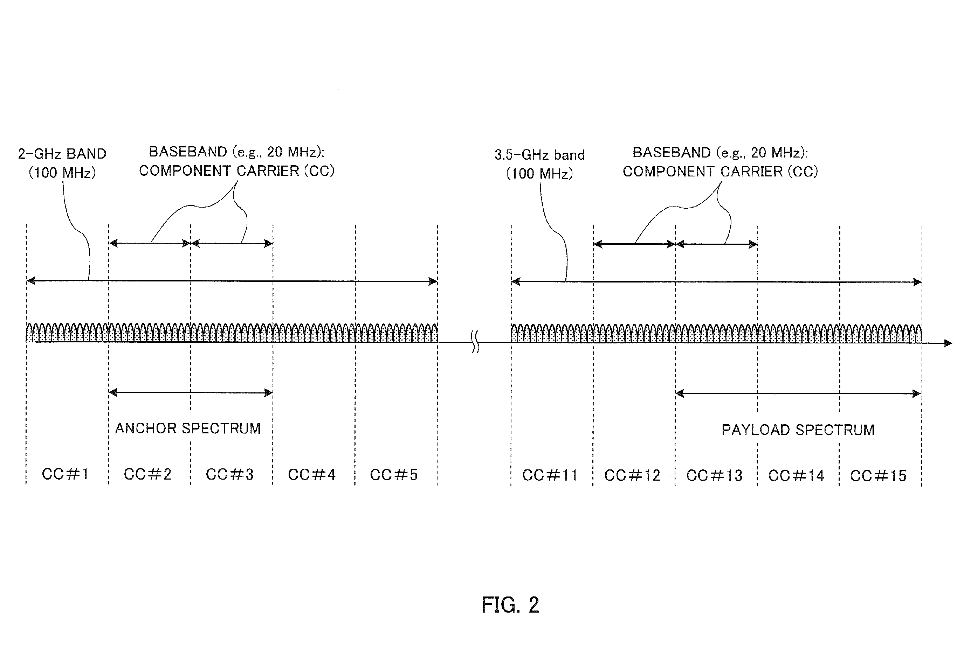

For this reason, LTE-A also supports spectrum aggregation that aggregates frequency spectra which are non-contiguous and in different frequency bands (e.g., component carriers) to ensure a wideband transmission bandwidth. Here, an overview of spectrum aggregation will be described. FIG.2 is a diagram illustrating an overview of spectrum aggregation. For convenience of description, a 2-GHz band having a transmission bandwidth of 100 MHz with 2 GHz as a center frequency and a 3.5-GHz band having a transmission bandwidth of 100 MHz with 3.5 GHz as a center frequency are shown as transmission bands having frequency spectra subject to spectrum aggregation. Furthermore, suppose component carriers (CC) constituting the 2-GHz band are called CC#1 to #5 and component carriers constituting the 3.5-GHz band are called CC#11 to #15.

As shown in FIG.2, when a transmission bandwidth of 100 MHz is ensured, for example, it is possible to use CC#2 and #3 which are frequency spectra constituting the 2-GHz band and CC#13 to #15 which are frequency spectra constituting the 3.5-GHz band in spectrum aggregation. By performing information transmission using a transmission band of 100 MHz made up of CC#2, #3 and CC#13 to #15 which are non-contiguous and in different frequency bands, spectrum aggregation can realize wideband transmission even in the case where contiguous frequency spectrum cannot be ensured.

However, various problems are pointed out about spectrum aggregation originating in the use of frequency spectra which are non-contiguous and in different frequency bands. For example, since propagation path loss (path loss) differs depending on each frequency spectrum used for information transmission in spectrum aggregation, the range, in which control information satisfies the required receiving quality, differs depending on each frequency spectrum, resulting in a problem that it is impossible to arrange the cell efficiently.

Using the example shown in FIG. 2, the path loss differs a great deal between the case where information is transmitted using the frequency spectra of the 2-GHz band and the case where information is transmitted using the frequency spectra of the 3.5-GHz band, and the path loss in the latter is greater. The cell arrangement in a cellular system is generally determined by a range in which control information (control channel signal or the like) can be communicated with required receiving quality (hereinafter referred to as "control information communicable range" as appropriate). However, in the spectrum aggregation shown in FIG.2, since the path loss in the frequency spectra of the 3.5-GHz band is greater than the frequency spectra of the 2-GHz band, the control information communicable range of the 3.5-GHz band is narrower than the control information communicable range of the frequency spectra of the 2-GHz band. For this reason, if the cell is arranged according to the frequency spectra of the 2-GHz band, there can be cases where control information cannot be demodulated in the frequency spectra of the 3.5-GHz band. On the other hand, if the cell is arranged according to the frequency spectra of the 3.5-GHz band, the cell radius diminishes and the number of base station apparatuses eNodeB increases and the cost increases. Spectrum aggregation needs to take these circumstances into consideration and cannot arrange the cell efficiently.

Moreover, since spectrum aggregation needs to demodulate all control information of different frequency spectra, the mobile station apparatus UE needs to monitor control information allocated to different frequency spectra through a receiving circuit, resulting in another problem that power consumption increases as the receiving circuit is driven. Using the example shown in FIG. 2, since the mobile station apparatus UE requires processing of always monitoring control information allocated to the frequency spectrum of the 2-GHz band and control information allocated to the frequency spectrum of the 3.5-GHz band, and demodulating the control information when the control information is detected, and thus power consumption increases as such a receiving circuit is driven.

These problems are caused by differences in path loss between different frequency spectra used for information transmission in spectrum aggregation. That is, since the path loss differs between different frequency spectra, there is a variation in the control information communicable range and there can be cases where the cell cannot be arranged efficiently or power consumption of the receiving circuit required for monitoring of control information in different frequency spectra increases. The present inventor came up with the present invention by focusing attention on the fact that various problems when wideband transmission is performed using spectrum aggregation are caused by differences in path loss between different frequency spectra used for information transmission.

From such a standpoint, the information transmission method according to the present invention allocates first information requiring communication quality to a frequency spectrum having small path loss among different frequency spectra used for information transmission in spectrum aggregation, and allocates second information requiring lower communication quality than the first information to a frequency spectrum having large path loss. Thus, the first information requiring high communication quality (receiving quality) such as control information is transmitted by the frequency spectrum having small path loss, and the mobile station apparatus UE makes most of this first information, and can thereby solve various problems caused by differences inpathlossbetween different frequency spectra and thereby efficiently perform wideband transmission using spectrum aggregation.

In the following description, suppose a relatively low frequency spectrum with small path loss is called "anchor spectrum" and a relatively high frequency spectrum with large path loss is called "payload spectrum" for convenience of description. In the example shown in FIG. 2, the frequency spectrum made up of CC#2 and #3 included in the 2-GHz band constitute an anchor spectrum and the frequency spectrum made up of CC#13 to #15 included in the 3.5-GHz band constitute a payload spectrum. These anchor spectrum and payload spectrum may be made up of component carriers constituting the system band of an LTE system or may be made up of some frequency spectra in the component carriers. Furthermore, the anchor and payload spectra may be made up of a single frequency spectrum or may be made up of a plurality of frequency spectra.

An information transmission method according to a first aspect of the present invention selects a frequency spectrum (anchor spectrum, payload spectrum) to be allocated according to receiving quality required for information transmitted. To be more specific, information with relatively high receiving quality requirements is allocated to the anchor spectrum as first information, and information with relatively low receiving quality requirements is allocated to the payload spectrum as second information.

The information transmission method according to the first aspect selects a frequency spectrum to be allocated according to, for example, the type of information to be transmitted. The first information allocated, for example, to the anchor spectrum includes control information necessary for communication control of user data. On the other hand, the information allocated to the payload spectrum includes user data (shared channel signal (PDSCH: Physical Downlink Shared Channel)).

The control information allocated to the anchor spectrum includes, for example, a broadcast channel signal (BCH) that transmits system-specific or cell-specific control information, paging channel signal for paging, synchronization signal (SS) for a cell search, downlink Layer 1 (L1)/Layer 2 (L2) control information (DCI: Downlink Control Information) and uplink control information. Here, the DCI includes resource block (RB) allocation information, modulation scheme, transport block (TB) size, HARQ (Hybrid ARQ) related information, and MIMO (Multiple Input Multiple Output) transmission related information. Furthermore, the uplink control information includes ACK (Acknowledgement)/NACK (Negative-Acknowledgement) information of HARQ.

The information transmission method according to the first aspect transmits information with high receiving quality requirements such as control information using the anchor spectrum, and can thereby stably transmit information with high receiving quality requirements to the mobile station apparatus UE and thereby transmit information of high importance to the mobile station apparatus UE with high accuracy.

When control information is transmitted as information with high receiving quality requirements in particular, the control information is transmitted using only the anchor spectrum, and therefore the cell can be arranged in accordance with the control information communicable range of the anchor spectrum without considering differences in path loss between different frequency spectra used for information transmission, making it possible to arrange the cell efficiently.

Furthermore, in the information transmission method according to the first aspect, when control information is transmitted as information with high receiving quality requirements, the control information is transmitted using only the anchor spectrum, and therefore only the receiving circuit that monitors the control information allocated to the anchor spectrum needs to be driven, and it is thereby possible to reduce power consumption compared to the case where control information allocated to both the anchor spectrum and payload spectrum is monitored.

Particularly, the information transmission method according to the first aspect can also perform handover processing in the mobile station apparatus UE by measuring receiving quality of a reference signal (pilot signal) transmitted using the anchor spectrum. Thus, when handover processing is performed by measuring receiving quality of a reference signal transmitted using the anchor spectrum, it is possible to reduce power consumption on standby required for a cell search.

Furthermore, when the information transmission method according to the first aspect is applied, by setting the anchor spectrum to a worldwide common frequency spectrum, it is possible to flexibly support roaming processing. In this case, when the payload spectrum is also set to a frequency spectrum specific to a region or country, it is possible to acquire information of the payload spectrum by demodulating the control information of the anchor spectrum, and thereby flexibly realize roaming processing.

A case has been described above where only control information is transmitted using the anchor spectrum, but the transmission target using the anchor spectrum is not limited to this. For example, part of user data may be transmitted using the anchor spectrum. That is, if control information is included in information transmitted using the anchor spectrum, information other than the control information may also be transmitted. In this case, the anchor spectrum can also be used to transmit part of user data and it is thereby possible to perform wideband transmission more efficiently using spectrum aggregation.

The information transmission method according to the second aspect of the present invention selects a frequency spectrum (anchor spectrum, payload spectrum) allocated according to service quality (QoS: Quality of Service) required for information transmitted. To be more specific, user data (shared channel signal (PDSCH)) with relatively high QoS requirements is allocated to the anchor spectrum as first information, and user data (shared channel signal (PDSCH)) with relatively low QoS requirements is allocated to the payload spectrum as second information.

The information transmission method according to the second aspect selects, for example, a frequency spectrum to be allocated according to the degree of delay requirements of user data to be transmitted. That is, the user data allocated to the anchor spectrum includes real time (RT) traffic data with strict delay requirements such as voice data and streaming data. On the other hand, user data allocated to the payload spectrum includes non-real time (NRT) traffic data with moderate delay requirements such as download data at a web site displayed on the mobile station apparatus UE.

In the information transmission method according to the second aspect, criteria for judgment when selecting a frequency spectrum are not limited to the degree of delay requirements of user data to be transmitted.

The information transmission method according to the second aspect transmits user data with high QoS requirements such as RT traffic data using the anchor spectrum, and can thereby stably transmit user data with high QoS requirements to the mobile station apparatus UE, and thereby improve QoS of user data to be transmitted. Particularly when RT traffic data is user data to be transmitted, it is possible to reduce the possibility of occurrence of loss of traffic data and thereby transmit RT traffic data accurately.

User data with low QoS requirements such as NRT traffic data is transmitted using the payload spectrum, but even when data with low QoS requirements is transmitted using the payload spectrum having large path loss, it is possible to minimize cases where user data cannot be received by adopting measures such as quality compensation using retransmission control by HARQ.

An information transmission method according to a third aspect of the present invention selects a frequency spectrum (anchor spectrum, payload spectrum) allocated according to a communication state between the base station apparatus eNodeB and mobile station apparatus UE. For example, the information transmission method according to the third aspect allocates third information in a poor communication state to the anchor spectrum and allocates fourth information in a better communication state than the third information to the payload spectrum. To be more specific, user data (shared channel signal (PDSCH)) for the mobile station apparatus UE having relatively large path loss between the mobile station apparatus and the base station apparatus eNodeB is allocated to the anchor spectrum as third information, and user data for the mobile station apparatus UE having relatively small path loss between the mobile station apparatus and the base station apparatus eNodeB is allocated to the payload spectrum as fourth information.

The information transmission method according to the third aspect selects a frequency spectrum to be allocated according to the position of the mobile station apparatus UE in a cell managed by the base station apparatus eNodeB. That is, user data allocated to the anchor spectrum includes user data for the mobile station apparatus UE located in the edge portion of the cell managed by the base station apparatus eNodeB. On the other hand, user data allocated to the payload spectrum includes user data for the mobile station apparatus UE located in the center portion of the cell managed by the base station apparatus eNodeB.

Criteria for judgment when selecting the frequency spectrum in the information transmission method according to the third aspect are not limited to the position of the mobile station apparatus UE in the cell.

The information transmission method according to the third aspect allocates third information in a poor communication state to the anchor spectrum, and allocates fourth information in a better communication state than the third information to the payload spectrum , and can thereby transmit user data for the mobile station apparatus UE in a poor communication state using the anchor spectrum, and thereby perform information transmission to the mobile station apparatus UE in a poor communication state while securing receiving quality to a maximum extent.

Especially, the information transmission method according to the third aspect transmits user data for the mobile station apparatus UE having large path loss between the mobile station apparatus UE and the base station apparatus eNodeB using the anchor spectrum, and can thereby stably transmit user data for the mobile station apparatus UE having large path loss and thereby perform information transmission while securing receiving quality of the user data to a maximum extent. Especially when user data for the mobile station apparatus UE located in the edge portion of the cell is the transmission target, it is possible to improve throughput characteristics in the mobile station apparatus UE and thereby improve throughput characteristics of the entire system.

User data for the mobile station apparatus UE having small path loss between the mobile station apparatus UE and the base station apparatus eNodeB is transmitted using the payload spectrum, but even when the user data is transmitted using the payload spectrum having large path loss, it is possible to minimize cases where the user data cannot be received by adopting measures such as quality compensation using retransmission control, for example, by HARQ as in the case of the information transmission method according to the second aspect.

Hereinafter, embodiments of the present invention will be described in detail with reference to the accompanying drawings. A case will be described here where an LTE-A-based base station apparatus and mobile station apparatus are used.

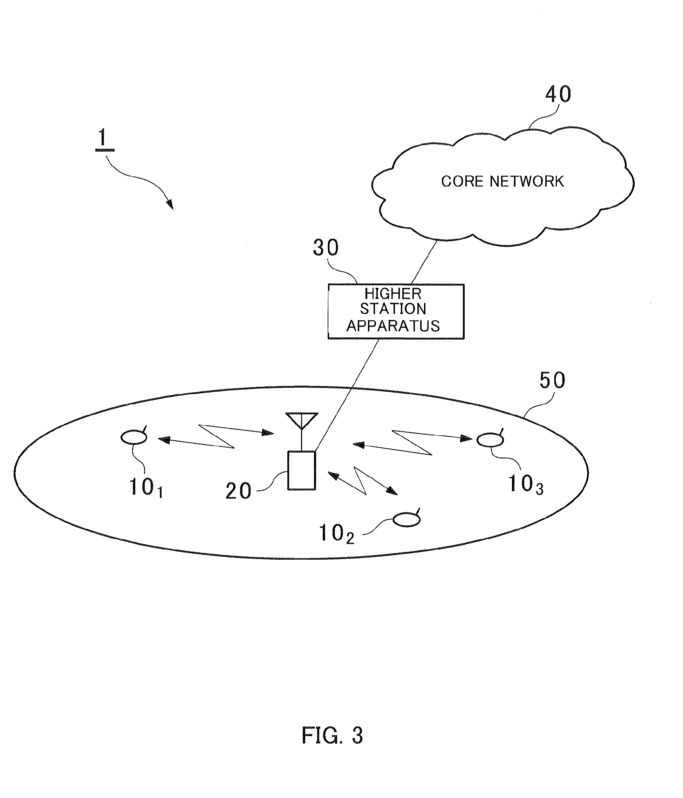

Amobile communication system 1 having amobile station apparatus (UE) 10 and a base station apparatus (eNodeB) 20 according to an embodiment of the present invention will be described with reference to FIG.3. FIG.3 is a diagram illustrating a configuration of the mobile communication system 1 having the mobile station apparatus 10 and the base station apparatus 20 according to the embodiment of the present invention. The mobile communication system 1 shown in FIG.3 is a system including an LTE system or SUPER 3G. This mobile communication system 1 may be called "IMT-Advanced" or "4G."

As shown in FIG.3, the mobile communication system 1 is configured by including the base station apparatus 20 and a plurality of mobile station apparatuses 10 (10₁, 10₂, 10₃, ···10ₙ; n is an integer n>0) that communicate with this base station apparatus 20. The base station apparatus 20 is connected to a higher station apparatus 30 and this higher station apparatus 30 is connected to a core network 40. The mobile station apparatus 10 is communicating with the base station apparatus 20 in a cell 50. The higher station apparatus 30 includes, for example, an access gateway apparatus, radio network controller (RNC), mobility management entity (MME), but is not limited to them.

The respective mobile station apparatuses (10₁, 10₂, 10₃, ··· 10ₙ) have identical configurations, functions and states, and therefore will be described as the mobile station apparatus 10 unless specified otherwise. Furthermore, for convenience of description, the description will be given assuming that the mobile station apparatus 10 wirelessly communicates with the base station apparatus 20, but more generally, the apparatus that communicates with the base station apparatus 20 is a user apparatus (UE: User Equipment) that includes a mobile station apparatus or a fixed terminal apparatus as well.

The mobile communication system 1 adopts, as a radio access scheme, OFDMA (orthogonal frequency division multiple access) on a downlink and SC-FDMA (single carrier -frequency multiple access) on an uplink. OFDMA is a multicarrier transmission scheme in which a frequency band is divided into a plurality of narrow frequency bands (subcarriers) and data is mapped to the respective subcarriers to perform communication. SC-FDMA is a single carrier transmission scheme in which a system band is divided into bands made up of one resource block or contiguous resource blocks for each terminal and a plurality of terminals use different bands to thereby reduce interference among terminals.

Here, a communication channel in an LTE system will be described. On a downlink, PDSCH which is shared among the respective mobile station apparatuses 10 and downlink L1/L2 control channels (PDCCH, PCFICH, PHICH) are used. Through this PDSCH, user data, that is, a normal data signal is transmitted. The transmission data is included in this user data. Component carriers CC allocated to the mobile station apparatus 10 by the base station apparatus 20 and scheduling information are reported to the mobile station apparatus 10 through the L1/L2 control channels.

On an uplink, PUSCH (Physical Uplink Shared Channel) which is shared among the respective mobile station apparatuses 10 and PUCCH (Physical Uplink Control Channel) which is an uplink control channel are used. User data is transmitted through this PUSCH. Downlink radio quality information (CQI: Channel Quality Indicator) or the like is transmitted through PUCCH.

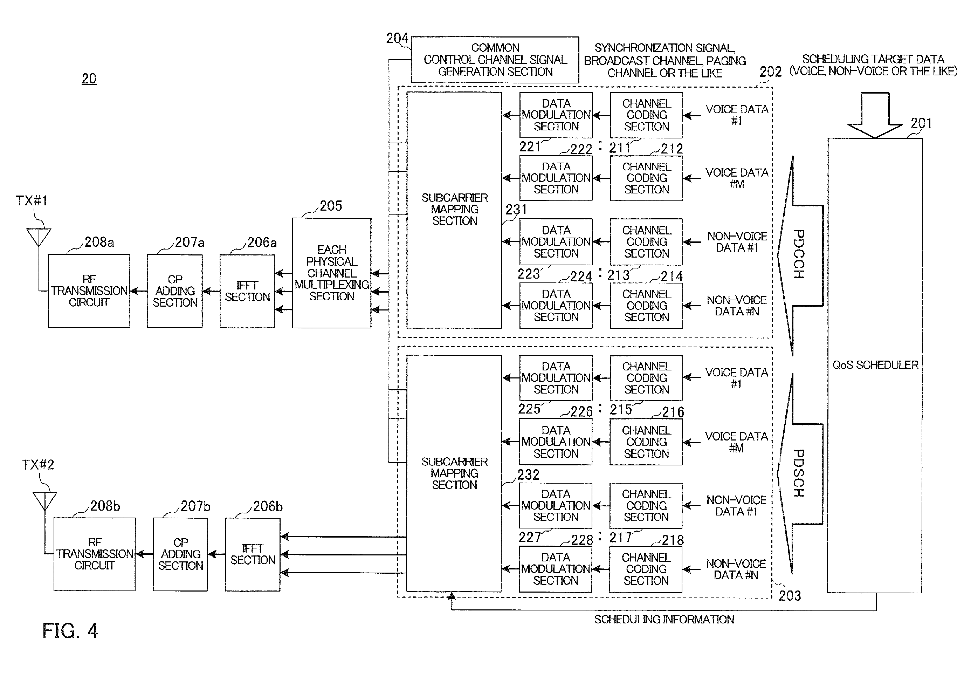

Next, the configuration of the transmitting section of the base station apparatus 20 according to the present embodiment will be described with reference to FIG. 4. FIG.4 is a block diagram showing the configuration of the transmitting section of the base station apparatus 20 according to the present embodiment. Although only the configuration related to the information transmission method according to the present invention is illustrated in the base station apparatus 20 shown in FIG.4 for convenience of description, suppose the base station apparatus 20 has a configuration provided for a normal base station apparatus including the receiving section.

A case of the base station apparatus 20 is shown in FIG. 4 where the aforementioned information transmission methods according to the first and second aspects are applied together. That is, in the base station apparatus 20, a frequency spectrum (anchor spectrum, payload spectrum) to be allocated is selected according to receiving quality required for information to be transmitted and also a frequency spectrum to be allocated is selected according to QoS. The former shows a case where the first information is control information and the second information is user data. The latter shows a case where the first information is voice data and the second information is non-voice data such as download data. FIG. 4 shows voice data for mobile station apparatuses UE#1 to #M as "voice data #1 to #M" and non-voice data for mobile station apparatuses UE#1 to #N as "non-voice data #1 to #N."

In the transmitting section of the base station apparatus 20 shown in FIG.4, user data to be scheduled (hereinafter referred to as "scheduling target data") is outputted to a QoS scheduler 201 from a higher station apparatus 30 (not shown). Here, suppose the scheduling target data includes voice data and non-voice data. The QoS scheduler 201 constitutes an allocating section and performs scheduling (allocation of radio resources) based on QoS required for the inputted user data. In this case, the QoS scheduler 201 generates scheduling information that preferentially allocates voice data to radio resources corresponding to the anchor spectrum and allocates non-voice data to radio resources corresponding to the payload spectrum. The scheduling information generated here is outputted to a subcarrier mapping section 232 of a shared data channel signal generation section 203 which will be described later.

Furthermore, a dedicated control channel signal (PDCCH) including control information required for transmission of scheduling target data is outputted to a dedicated control channel signal generation section 202 and a shared data channel signal (PDSCH) including user data (voice data, non-voice data) included in the scheduling target data is outputted to the shared data channel signal generation section 203. The dedicated control channel signal generation section 202 is a part that generates a control channel signal (PDCCH) corresponding to each mobile station apparatus UE and the shared data channel signal generation section 203 is a part that generates a shared data channel signal which is transmitted while sharing radio resources corresponding to PDSCH.

In the dedicated control channel signal generation section 202, a control channel signal regarding voice data #1 is inputted to a channel coding section 211. The control channel signal is channel-coded in the channel coding section 211 and then outputted to a data modulation section 221. The control channel signal is data-modulated in the data modulation section 221 and then outputted to a subcarrier mapping section 231. Similarly, a control channel signal regarding voice data #M is inputted to a channel coding section 212. The control channel signal is channel-coded in the channel coding section 212 and then outputted to a data modulation section 222. The control channel signal is data-modulated in the datamodulation section 222 and then outputted to the subcarrier mapping section 231. The same applies to control channel signals regarding voice data #2 to #M-1 (not shown).

Furthermore, in the dedicated control channel signal generation section 202, a control channel signal regarding non-voice data #1 is inputted to a channel coding section 213. The control channel signal is channel-coded in the channel coding section 213 and then outputted to a data modulation section 223. The control channel signal is data-modulated in the data modulation section 223 and then outputted to the subcarrier mapping section 231. A control channel signal regarding non-voice data #N is inputted to a channel coding section 214. The control channel signal is channel-coded in the channel coding section 214 and then outputted to a data modulation section 224. The control channel signal is data-modulated in the datamodulation section 224 and then outputted to the subcarrier mapping section 231. The same applies to control channel signals regarding non-voice data #2 to #N-1 (not shown).

The subcarrier mapping section 231 maps the control channel signals regarding the voice data #1 to #M inputted from the data modulation sections 221, 222 or the like and the control channel signals regarding the non-voice data #1 to #N inputted from the data modulation sections 223, 224 or the like to subcarriers. In this case, the control channel signals regarding the voice data #1 to #M and the control channel signals regarding the non-voice data #1 to #N are mapped to anchor spectra and outputted to each physical channel multiplexing section 205 which will be described later.

In the shared data channel signal generation section 203, voice data #1 is inputted to a channel coding section 215. The voice data #1 is channel-coded in the channel coding section 215 and then outputted to a data modulation section 225. The voice data #1 is data-modulated in the data modulation section 225 and then outputted to the subcarrier mapping section 232. Similarly, voice data #M is inputted to a channel coding section 216. The voice data #M is channel-coded in the channel coding section 216 and then outputted to a data modulation section 226. The voice data #M is data-modulated in the datamodulation section 226 and then outputted to the subcarrier mapping section 232. The same applies to voice data #2 to #M-1 (not shown).

In the shared data channel signal generation section 203, non-voice data #1 is inputted to a channel coding section 217. The non-voice data #1 is channel-coded in the channel coding section 217 and then outputted to a data modulation section 227. The non-voice data #1 is data-modulated in the data modulation section 227 and then outputted to the subcarrier mapping section 232. Non-voice data #N is inputted to a channel coding section 218. Non-voice data #N is channel-coded in the channel coding section 218 and then outputted to a data modulation section 228. The non-voice data #N is data-modulated in the data modulation section 228 and then outputted to the subcarrier mapping section 232. The same applies to non-voice data #2 to #N-1 (not shown).

The subcarrier mapping section 232 maps the voice data #1 to #M inputted from the data modulation sections 221, 222 or the like and the non-voice data #1 to #N inputted from the data modulation sections 223, 224 or the like to subcarriers according to the scheduling information given from the QoS scheduler 201. In this case, the non-voice data #1 to #N are mapped to subcarriers constituting payload spectra and outputted to an inverse fast Fourier transform section (IFFT section) 206b which will be described later. On the other hand, the voice data #1 to #M are mapped to anchor spectra and outputted to each physical channel multiplexing section 205 which will be described later.

A common control channel signal generation section 204 generates a common control channel signal including a synchronization signal, broadcast channel signal and paging channel signal. The common control channel signal generated is outputted to each physical channel multiplexingsection205. Each physical channel multiplexing section 205 multiplexes the control channel signals regarding the voice data #1 to #M and non-voice data #1 to #N inputted from the subcarrier mapping section 231, the voice data #1 to #M inputted from the subcarrier mapping section 232 and the common control signal inputted from the common control signal generation section 204.

The transmission signal multiplexed in each physical channel multiplexing section 2 05 is subjected to inverse fast Fourier transform in an inverse fast Fourier transform section (IFFT section) 206a and transformed from a frequency domain signal into a time domain signal. With a CP added thereto in a cyclic prefix (CP) adding section 207a, the signal is outputted to an RF transmission circuit 208a. After being subjected to frequency conversion processing whereby the signal is converted to a radio frequency band in the RF transmission circuit 208a, the signal is sent to the corresponding mobile station apparatus UE using an anchor spectrum via a transmitting antenna TX#1. Each physical channel multiplexing section 205, inverse fast Fourier transform section 206a, cyclic prefix adding section 207a, RF transmission circuit 208a and transmitting antenna TX#1 constitute a first transmitting section.

On the other hand, the inverse fast Fourier transform section (IFFT section) 206b applies inverse fast Fourier transform to the non-voice data #1 to #N inputted from the subcarrier mapping section 232 to transform the non-voice data #1 to #N from frequency domain signals to a time domain signal. The transmission signal transformed into the time domain signal is outputted to an RF transmission circuit 208b with a CP added thereto in a cyclic prefix (CP) adding section 207b. The transmission signal is subjected to frequency conversion processing in the RF transmission circuit 208b to convert the signal to a radio frequency band and then sent to the corresponding mobile station apparatus UE us ing a payload spectrum via a transmitting antenna TX#2. The inverse fast Fourier transform section 206b, cyclic prefix adding section 207b, RF transmission circuit 208b and transmitting antenna TX#2 constitute a second transmitting section.

A case has been described in the configuration of the base station apparatus 20 shown in FIG. 4 where the base station apparatus is provided with the single transmitting antenna TX#1 that transmits a transmission signal using an anchor spectrum and the single transmitting antenna TX#2 that transmits a transmission signal using a payload spectrum. However, the number of transmitting antennas TX is not limited to this and each part may also be provided with a plurality of transmitting antennas TX.

Thus, the base station apparatus 20 according to the present embodiment transmits a control channel signal only using an anchor spectrum, and can thereby arrange the cell according to the control information communicable range of the anchor spectrum without considering differences in path loss between different frequency spectra used for information transmission and thereby efficiently arrange the cell.

Furthermore, the base station apparatus 20 according to the present embodiment transmits voice data using an anchor spectrum and transmits non-voice data using a payload spectrum, and can thereby stably transmit voice data with high QoS requirements to the mobile station apparatus 10 and thereby improve QoS of the voice data.

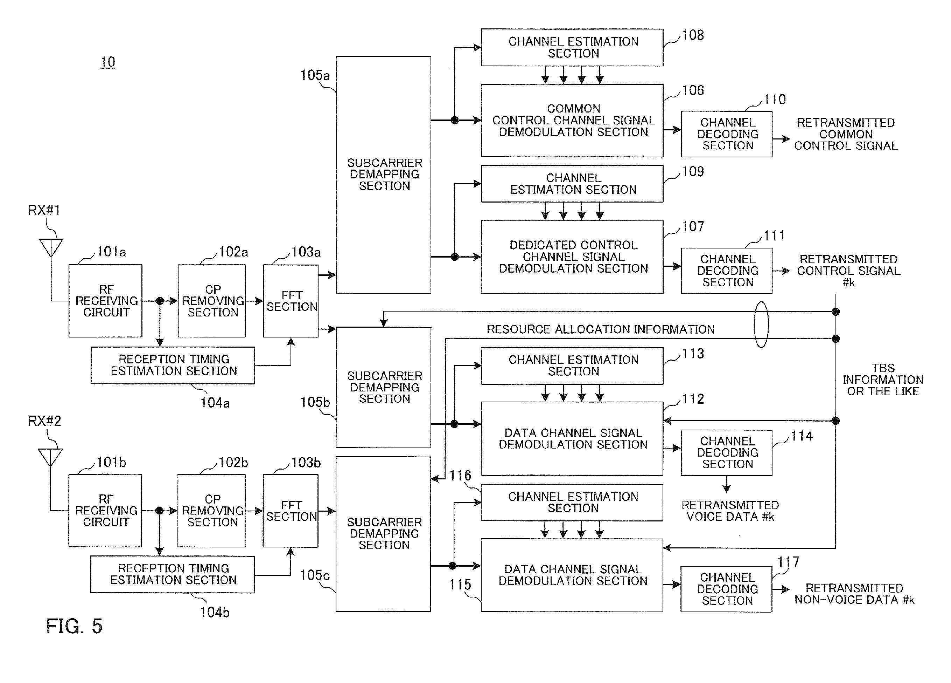

Next, the configuration of the receiving section of the mobile station apparatus 10 according to the present embodiment will be described with reference to FIG. 5. FIG.5 is a block diagram showing a configuration of the receiving section of the mobile station apparatus 10 according to the present embodiment. In the mobile station apparatus 10 shown in FIG.5, only the configuration related to the information transmission method according to the present invention is shown for convenience of description, but suppose the mobile station apparatus 10 has a configuration provided for a normal mobile station apparatus including the transmitting section.

In the mobile station apparatus 10 shown in FIG. 5, a transmission signal transmitted from the base station apparatus 20 using an anchor spectrum is received by a receiving antenna RX#1 and outputted to an RF receiving circuit 101a. The RF receiving circuit 101a applies frequency conversion processing of converting the signal from a radio frequency signal to a baseband signal, a CP removing section 102a removes a cyclic prefix added to the received signal and outputs the signal to a fast Fourier transform section (FFT section) 103a.

A reception timing estimation section 104a acquires the received signal outputted from the RF receiving circuit 101a, estimates reception timing (FFT processing timing) from a reference signal included in this received signal and reports the estimated reception timing to the FFT section 103a. The FFT section 103a applies Fourier transform to the received signal from the RF receiving circuit 101a according to the reception timing reported from the reception timing estimation section 104a to transform the signal from a time sequence signal into a frequency domain signal. A control channel signal included in the received signal is outputted to a subcarrier demapping section 105a, and voice data #1 to #M included in the received signal are outputted to a subcarrier demapping section 105b. The receiving antenna RX#1, RF receiving circuit 101a, CP removing section 102a, fast Fourier transform section 103a and reception timing estimation section 104a constitute part of a first receiving section.

On the other hand, the transmission signal transmitted from the base station apparatus 20 using a payload spectrum is received through a receiving antenna RX#2 and outputted to an RF receiving circuit 101b. The RF receiving circuit 101b applies frequency conversion processing of converting the signal from a radio frequency signal to a baseband signal, a CP removing section 102b removes the cyclic prefix added to the received signal and outputs the baseband signal to a fast Fourier transform section (FFT section) 103b.

A reception timing estimation section 104b acquires the received signal outputted from the RF receiving circuit 101b, estimates reception timing (FFT processing timing) from a reference signal included in this received signal and reports the estimated reception timing to the FFT section 103b. The FFT section 103b applies Fourier transform to the received signal from the RF receiving circuit 101b according to the reception timing reported from the reception timing estimation section 104b to transform the signal from a time sequence signal into a frequency domain signal. The control channel signal included in the receivedsignal is outputted to the subcarrier demapping section 105a, and non-voice data #1 to #N included in the received signal is outputted to the subcarrier demapping section 105c. The receiving antenna RX#2, RF receiving circuit 101b, CP removing section 102b, fast Fourier transform section 103b and reception timing estimation section 104b constitute part of a second receiving section.

A case has been described in the configuration of the mobile station apparatus 10 shown in FIG. 5 where the mobile station apparatus 10 is provided with the single receiving antenna RX#1 that receives a transmission signal transmitted using an anchor spectrum and the single receiving antenna RX#2 that receives a transmission signal transmitted using a payload spectrum. However, the number of receiving antennas RX is not limited to this and each part may be provided with a plurality of receiving antennas RX.

A control channel signal included in the received signal is demapped in the subcarrier demapping section 105a to be returned to a time sequence signal and outputted to a common control channel signal demodulation section 106 and a dedicated control channel signal demodulation section 107. Channel estimation sections 108 and 109 estimate a channel state from a reference signal included in the received signal outputted from the subcarrier demapping section 105a and report the estimated channel state to the common control channel signal demodulation section 106 and the dedicated control channel signal demodulation section 107.

The common control channel signal demodulation section 106 applies demodulation processing to the control channel signal inputted from the subcarrier demapping section 105a, a channel decoding section 110 applies channel decoding processing to the control channel signal to thereby reproduce a common control channel signal. This causes the common control signal including, for example, a synchronization signal, broadcast channel signal and paging channel signal transmitted from the base station apparatus 20 to be reproduced. The common control channel signal demodulation section 106 constitutes part of a first demodulating section.

The dedicated control channel signal demodulation section 107 applies demodulation processing to the control channel signal inputted from the subcarrier demapping section 105a, a channel decoding section 111 then applies channel decoding processing thereto and a dedicated control channel signal (dedicated control channel signal #k) directed to the present mobile station apparatus 10 (here, suppose a mobile station apparatus UE#k) is thereby reproduced. Resource allocation information included in the reproduced dedicated control channel signal is outputted to the subcarrier mapping sections 105b and 105c and information on the transport block size or the like is outputted to data channel signal demodulation sections 112 and 115. The dedicated control channel signal demodulation section 107 constitutes part of the first demodulating section.

On the other hand, voice data #1 to #M included in the received signal are demapped in the subcarrier demapping section 105b based on the reported resource allocation information, returned to a time sequence signal and then outputted to the data channel signal demodulation section 112. A channel estimation section 113 estimates a channel state from a reference signal included in the received signal outputted from the subcarrier demapping section 105b and reports the estimated channel state to the data channel signal demodulation section 112.

The data channel signal demodulation section 112 applies demodulation processing to the voice data #1 to #M inputted from the subcarrier demapping section 105b, a channel decoding section 114 then applies channel decoding processing thereto and voice data (voice data #k) directed to the present mobile station apparatus 10 (here, suppose a mobile station apparatus UE#k) is thereby reproduced. The data channel signal demodulation section 112 constitutes part of a second demodulating section.

Furthermore, the non-voice data #1 to #N included in the received signal is demapped in the subcarrier demapping section 105c based on the reported resource allocation information, returned to a time sequence signal and then outputted to the data channel signal demodulation section 115. A channel estimation section 116 estimates a channel state from a reference signal included in the received signal outputted from the subcarrier demapping section 105c and reports the estimated channel state to the data channel signal demodulation section 115.

The data channel signal demodulation section 115 applies demodulation processing to the non-voice data #1 to #N inputted from the subcarrier demapping section 105c and a channel decoding section 117 applies channel decoding processing to reproduce non-voice data (non-voice data #k) directed to the present mobile station apparatus 10 (here, assumed to be a mobile station apparatus UE#k). The data channel signal demodulation section 115 constitutes part of the second demodulating section.

Thus, since the mobile station apparatus 10 according to the present embodiment receives a control channel signal transmitted from the base station apparatus 20 using only an anchor spectrum, it is only necessary to drive a receiving circuit that monitors control information of the anchor spectrum, and it is thereby possible to reduce power consumption compared to a case where a plurality of receiving circuits are driven.

Furthermore, the mobile station apparatus 10 according to the present embodiment receives voice data transmitted from the base station apparatus 20 using an anchor spectrum and also receives non-voice data transmitted using a payload spectrum, and can thereby stably receive voice data with high QoS requirements from the base station apparatus 20.

As described so far, the information transmission method according to the present embodiment allocates first information requiring communication quality to the anchor spectrum among different frequency spectra used for information transmission in spectrum aggregation, and allocates second information requiring lower communication quality than the first information to a payload spectrum. Thus, since the first information requiring communication quality is transmitted using the anchor spectrum, the first information can be stably transmitted to the mobile station apparatus 10. For example, by including control information in the first information, it is possible to solve various problems caused by differences in path loss between different frequency spectra such as arranging the cell efficiently without considering differences in path loss between the anchor spectrum and payload spectrum, and thereby efficiently perform wideband transmission using spectrum aggregation.

The present invention has been described in detail using the aforementioned embodiment, but it is obvious to those skilled in the art that the present invention is not limited to the embodiment described in the present DESCRIPTION. The present invention can be implemented as modified or altered embodiments without departing from the spirit and scope of the present invention def ined in the description of the scope of patent claims. Therefore, the description of the present DESCRIPTION is intended to be illustrative and by no means intended to limit the scope of the present invention.

The present application is based on Japanese Patent Application No.2010-040139 filed on February 25, 2010, entire content of which is expressly incorporated by reference herein.

## Claims

1. An information transmission method using spectrum aggregation that aggregates frequency spectra, which are non-contiguous and in different frequency bands, to perform wideband transmission, comprising the steps of:
allocating first information requiring communication quality to a frequency spectrum having small path loss among the frequency spectra used for information transmission, and allocating second information requiring lower communication quality than the first information to a frequency spectrum having large path loss; and
transmitting the first information with the frequency spectrum having small path loss, and transmitting the second information with the frequency spectrum having large path loss.

2. The information transmission method according to claim 1, wherein information with relatively high receiving quality requirement is allocated to the frequency spectrum having small path loss as the first information, and information with relatively low receiving quality requirement is allocated to the frequency spectrum having large path loss as the second information.

3. The information transmission method according to claim 2, wherein control information is allocated to the frequency spectrum having small path loss as the first information, and user data is allocated to the frequency spectrum having large path loss as the second information.

4. The information transmission method according to claim 1, wherein information with a relatively high service quality requirement is allocated to the frequency spectrum having small path loss as the first information, and information with relatively low service quality requirement is allocated to the frequency spectrum having large path loss as the second information.

5. The information transmission method according to claim 4, wherein real time traffic data with a strict delay requirement is allocated to the frequency spectrum having small path loss as the first information, and non-real time traffic data with a moderate delay requirement is allocated to the frequency spectrum having large path loss as the second information.

6. The information transmission method according to claim 1, wherein third information in a poor communication state instead of the first information is allocated to the frequency spectrum having small path loss, and fourth information in a better communication state than the third information instead of the second information is allocated to the frequency spectrum having large path loss, and the third information is transmitted with the frequency spectrum having small path loss, and the fourth information is transmitted with the frequency spectrum having large path loss.

7. The information transmission method according to claim 6, wherein information having relatively large path loss between a base station apparatus and a mobile station apparatus is allocated to the frequency spectrum having small path loss as the third information, and information having relatively small path loss between the base station apparatus and the mobile station apparatus is allocated to the frequency spectrum having large path loss as the fourth information.

8. The information transmission method according to claim 7, wherein user data corresponding to a mobile station apparatus located in an edge portion of a cell managed by the base station apparatus is allocated to the frequency spectrum having small path loss as the third information, and user data corresponding to a mobile station apparatus located in a center portion of the cell managed by the base station apparatus is allocated to the frequency spectrum having large path loss as the fourth information.

9. Abase station apparatus that performs information transmission using spectrum aggregation that aggregates frequency spectra which are non-contiguous and in different frequency bands, comprising:
an allocating section configured to allocate first information requiring communication quality to a frequency spectrum having small path loss among the frequency spectra used for information transmission, and to allocate second information requiring lower communication quality than the first information to a frequency spectrum having large path loss;
a first transmitting section configured to transmit the first information with the frequency spectrum having small path loss; and
a second transmitting section configured to transmit the second information with the frequency spectrum having large path loss.

10. A mobile station apparatus that receives information transmission using spectrum aggregation that aggregates frequency spectra which are non-contiguous and in different frequency bands, comprising:
a first receiving section configured to receive first information requiring communication quality allocated to a frequency spectrum having small path loss among the frequency spectra used for information transmission;
a second receiving section configured to receive second information requiring lower communication quality than the first information allocated to a frequency spectrum having large path loss;
a first demodulating section configured to demodulate the first information received by the first receiving section; and
a second demodulating section configured to demodulate the second information received by the second receiving section.
